# EUROPÄISCHE PATENTANMELDUNG

(11) **EP 4 274 008 A1**
(43) Veröffentlichungstag der Anmeldung: **08.11.2023**
(21) Anmeldenummer: 22172025.3
(22) Anmeldetag: 06.05.2022
(51) Int. Cl.: H01M 50/204, A47B 81/00, B65D 81/00, E05G 1/12, H01M 50/218, H01M 50/24, H01M 50/30

(54) **BEHÄLTNIS ZUR LAGERUNG VON BATTERIEN SOWIE DESSEN VERWENDUNG**

(71) Anmelder: LACONT Umwelttechnik GmbH, 39435 Egeln (DE)
(72) Erfinder: Heßmer, Klaus, 97794 Rieneck (DE); PODZUWEIT, Jürgen, 04207 Leipzig (DE)
(74) Vertreter: PATERIS Patentanwälte PartmbB

(57) **Zusammenfassung**

Es wird ein Behältnis 1 zur Lagerung von Batterien 100 angegeben. Das Behältnis 1 weist auf: einen einen Lagerraum 2 umschließenden Behältniskörper 3 mit einer Beladungs- und Entnahmeöffnung 4, ein in der Beladungs- und Entnahmeöffnung 4 angeordnetes Türelement 5, ein Verriegelungssystem 6, ausgebildet zum Arretieren des Türelements 5 in der Beladungs- und Entnahmeöffnung 4 bei geschlossenem Türelement 5, und eine im Behältniskörper 3 oder im Türelement 5 angeordnete Druckentlastungsöffnung 7.

## Beschreibung

Die Erfindung betrifft ein Behältnis zur Lagerung von Batterien sowie die Verwendung eines solchen Behältnisses.

Batterien, insbesondere wiederaufladbare Batterien, d. h. Akkumulatoren, im Folgenden kurz als Akkus bezeichnet, wie zum Beispiel Lithium-Ionen-Akkus, weisen ein erhebliches Gefährdungspotenzial auf. So werden immer wieder Fälle von überhitzten oder explodierenden Akkus in verschiedensten Einsatzvarianten bekannt, z. B. als Akku von E-Bikes, Laptops, Handys, Werkzeugen etc.

Mögliche Gefahren im Umgang mit Batterien sind eine mechanische Beschädigung in Kombination mit der hohen Energiedichte, eine elektrische Überlastung beim Laden und Entladen sowie eine thermische Überlastung durch extreme Wärme oder andere Energiequellen. Dies kann zu einem sog. "Thermal Runaway" führen, der mit einer Feuer- und Rauchentwicklung und/oder einer Explosion einhergehen kann.

Dies hat bereits zu vielen Bränden und Zerstörung von Material und Gebäuden geführt. Auch von Seiten der Feuerwehr wird verstärkt auf die möglichen Folgen falscher Lagerung oder falschen Ladens hingewiesen. Im Übereinkommen über die internationale Beförderung gefährlicher Güter auf der Straße (abgekürzt: ADR) werden derartige Batterien als Gefahrgut der Klasse 9 zugeordnet und als besonders kritisch eingestuft.

Bisher werden zur Lagerung solcher Batterien Gefahrstoffsicherheitsschränke, z. B. nach DIN EN 14470-1:2004-07, genutzt, d. h. feuerwiderstandsfähige Lagerschränke bzw. Sicherheitsschränke für brennbare Flüssigkeiten, wie sie beispielsweise zur Lagerung von entzündbaren Flüssigkeiten am Arbeitsplatz konzipiert und in Hinblick auf den Brandschutz optimiert sind.

Tests der Erfinder der vorliegenden Erfindung haben jedoch ergeben, dass derartige Schränke einer Explosion, wie sie z. B. von einem überladenen oder kurzgeschlossenen Akku hervorgerufen werden kann, nicht oder allenfalls eingeschränkt standhalten. Bei einer Explosion öffnen sich die Türen und es besteht die Gefahr, dass Teile des Sicherheitsschranks oder darin gelagerter Gegenstände in die Umgebung geschleudert werden und in der Nähe befindliche Personen verletzen oder Gegenstände beschädigen. Außerdem kann ein im Sicherheitsschrank ausgebrochener Brand schnell auf die Umgebung übergreifen.

Darüber hinaus können Gefahrstoffe und Dämpfe, wie fluorwasserstoffhaltige, z. B. flusssäurehaltige, Gase, in die Umgebung gelangen. Da diese Stoffe als gesundheitsschädlich und giftig eingestuft sind, geht von ihnen ein erhebliches Gefährdungspotenzial aus.

Vor diesem Hintergrund ist es Aufgabe der Erfindung, ein Behältnis zur Lagerung von Batterien anzugeben, mit dem die vorstehend genannten Nachteile zumindest teilweise behoben werden können.

Gelöst wird diese Aufgabe durch die Gegenstände der unabhängigen Ansprüche. Die abhängigen Ansprüche betreffen Ausgestaltungen der erfindungsgemäßen Lösungen.

Die vorliegende Erfindung basiert zumindest in Teilen auf der Erkenntnis, dass die einleitend beschriebenen Gefahrstoffsicherheitsschränke zwar einen ausreichenden Brandschutz gewährleisten können, indem sie z. B. über intumeszierende Beschichtungen verfügen, die bei Erreichen einer bestimmten Temperatur aufschäumen und eine Abdichtung gewährleisten, so dass die Luft- und damit Sauerstoffzufuhr zum Inneren des Schranks unterbunden und der Brand dadurch gelöscht wird. Dies gilt jedoch nur bei einer vergleichsweise langsamen Erwärmung über die Dauer einiger Minuten.

Eine Explosion ist hingegen mit einem Druckaufbau und ggf. einer Flammenausbreitung innerhalb weniger Sekunden, z. B. innerhalb von 1 - 2 s, verbunden, wogegen intumeszierende Beschichtungen kaum Schutz bieten. Es ist daher erforderlich, ein Behältnis zu schaffen, welches einem durch eine Explosion verursachten Druckaufbau standhalten kann.

Ein erster Aspekt der Erfindung betrifft daher ein Behältnis zur Lagerung von Batterien, wie z. B. Lithium-Ionen-Akkus. Mit dem Begriff "Batterie" werden vorliegend Speicher für elektrische Energie auf elektrochemischer Basis bezeichnet.

Das Behältnis weist einen Behältniskörper auf, der einen Lagerraum umschließt. Mit anderen Worten ist der Behältniskörper hohl ausgebildet. Der Behältniskörper verfügt über eine Beladungs- und Entnahmeöffnung. In den Lagerraum können die zu lagernden Batterien über die Beladungs- und Entnahmeöffnung zum Zwecke ihrer Lagerung eingebracht und nach Lagerung wieder entnommen werden. Die Lagerung kann beispielsweise zur Aufbewahrung und/oder zum Transport erfolgen.

Der Lagerraum kann mehrere Lagerebenen aufweisen, die z. B. durch Bleche oder Gitterroste gebildet sein können. Optional können die Lagerebenen höhenverstellbar ausgebildet sein. Zu Einbringung der Lagerebenen in den Behältniskörper kann auch ein Kragarmregal vorgesehen sein.

Vorzugsweise kann der Behältniskörper die Feuerwiderstandsklasse F90 gemäß DIN 4102-2:1977-09 erfüllen. Hierdurch wird ein Funktionserhalt über 90 min gewährleistet.

In der Beladungs- und Entnahmeöffnung ist ein Türelement angeordnet. Zum Einbringen und Entnehmen der Batterien in den bzw. aus dem Lagerraum kann das Türelement geöffnet werden, d. h. in einen geöffneten Zustand gebracht werden. Während der Lagerung der Batterien kann das Türelement geschlossen werden, d. h. in einen geschlossenen Zustand gebracht werden, in dem die Beladungs- und Entnahmeöffnung vom Türelement verschlossen wird. Mit anderen Worten ist das Türelement zum Öffnen und Verschließen der Beladungs- und Entnahmeöffnung ausgebildet. Bei geschlossenen Zustand des Türelements wird der Lagerraum vom Behältniskörper und dem Türelement mit Ausnahme der Druckentlastungsöffnung, wie nachstehend erläutert, vollständig umschlossen

Das Türelement kann bevorzugt als Anschlagtür, auch als Schwenktür bezeichnet, ausgebildet sein und folglich einen beweglichen Türflügel aufweisen, der mittels Anschlägen in der Beladungs- und Entnahmeöffnung gehalten wird. Optional kann die Anschlagtür als Doppelanschlagtür ausgebildet sein. Der Öffnungswinkel der Anschlagtür kann bevorzugt mehr als 90°, beispielsweise 130° betragen, um eine verbesserte Zugänglichkeit zum Lagerraum zu ermöglichen.

Vorzugsweise kann das Türelement die Feuerwiderstandsklasse T90 gemäß DIN 4102-2:1977-09 erfüllen. Hierdurch wird ein Funktionserhalt über 90 min gewährleistet.

Der Behältniskörper kann beispielsweise eine im Wesentlichen quaderförmige Form aufweisen. Hierbei kann die Beladungs- und Entnahmeöffnung bevorzugt einen rechteckigen Querschnitt aufweisen, wobei das Türelement entsprechend rechteckig ausgebildet ist. Dies kann eine einfache Fertigung des Türelements sowie eine flexible Aufstellung des Behältnisses in Räumen, insbesondere eine wandnahe Aufstellung, ermöglichen.

Weiterhin weist das Behältnis ein Verriegelungssystem auf, das zum Arretieren des Türelements in der Beladungs- und Entnahmeöffnung bei geschlossenem Türelement ausgebildet ist. Mit anderen Worten kann das Türelement im geschlossenen Zustand durch Betätigen des Verriegelungssystems arretiert werden, so dass die Beladungs- und Entnahmeöffnung fest verschlossen wird.

Das Verriegelungssystem kann ein oder mehrere Verriegelungselemente und damit Verriegelungsstellen, an denen das Türelement in der Beladungs- und Entnahmeöffnung arretiert wird, aufweisen. Teile des Verriegelungssystems können sowohl am Türelement als auch am Behältniskörper nahe der Beladungs- und Entnahmeöffnung angeordnet sein. Die Anzahl der Verriegelungselemente kann in Abhängigkeit der Beladungs- und Entnahmeöffnung festgelegt sein. Beispielsweise können drei Verriegelungselemente bei einer Größe der Beladungs- und Entnahmeöffnung im Bereich von ca. 1100 × 1600 mm vorgesehen sein. Je mehr Verriegelungselemente das Verriegelungssystem umfasst, desto besser kann das Türelement auch bei einer Druckerhöhung im Inneren des Lagerraums in der Beladungs- und Entnahmeöffnung gehalten werden.

Optional kann das Verriegelungssystem abschließbare Verriegelungselemente aufweisen, um eine unbefugte Öffnung des Türelements zu verhindern.

Darüber hinaus weist das Behältnis eine Druckentlastungsöffnung auf, die im Behältniskörper angeordnet ist. Die Druckentlastungsöffnung verbleibt stets in einem zumindest teilweise geöffneten Zustand, so dass stets ein Gasaustausch zwischen dem Lagerraum und der Umgebung ermöglicht ist. Bei einer Druckerhöhung im Inneren des Lagerraums, z. B. in Folge einer Explosion, kann über die Druckentlastungsöffnung ein Druckausgleich zwischen dem Lagerraum und der Umgebung erfolgen.

Selbstverständlich können auch mehrere Druckentlastungsöffnungen im Behältniskörper angeordnet sein, die bevorzugt gleichmäßig verteilt angeordnet sein können. Mehrere Druckentlastungsöffnungen können zu einem gleichmäßigeren Druckausgleich führen, wodurch die Haltbarkeit des Behältnisses bei Druckanstieg im Lagerraum verbessert sein kann.

Das Behältnis ist mit Ausnahme der Druckentlastungsöffnung bevorzugt rauchdicht ausgebildet, d. h. Rauch bzw. Gase können bei geschlossenem Türelement lediglich über die Druckentlastungsöffnung aus dem Lagerraum entweichen.

Das vorgeschlagene Behältnis zeichnet sich durch eine hohe Haltbarkeit bzw. Beständigkeit bei einer Explosion, Temperaturerhöhung und Flammenausbreitung im Lagerraum, beispielsweise in Folge einer Überhitzung einer gelagerten Batterie, aus. Batterien können im vorgeschlagenen Behältnis sicher gelagert, also z. B. aufbewahrt und/oder transportiert, werden. Die Gefahr einer Zerstörung des Behältnisses ist deutlich geringer als bei den einleitend beschriebenen Gefahrstoffsicherheitsschränken. Insbesondere die Gefahr, dass Teile des Behältnisses oder darin gelagerter Gegenstände in die Umgebung geschleudert werden und in der Nähe befindliche Personen verletzen oder Gegenstände beschädigen, kann erheblich verringert werden. Zudem kann auch das Übergreifen eines im Behältnis ausbrechenden Brandes auf die Umgebung weitgehend verhindert oder zumindest stark verzögert werden.

Gemäß verschiedenen Ausführungsvarianten kann das Behältnis ein Filter, ausgebildet zur Filterung von aus dem Lagerraum entweichenden Gasen, aufweisen.

Das Filter kann zur Entfernung von Fluorwasserstoff aus den aus dem Lagerraum entweichenden Gasen ausgebildet sein.

Indem das aus dem Lagerraum, z. B. in Folge eines Überdrucks, entweichende Gase gefiltert werden, kann der Eintrag von Schadstoffen, z. B. von bei der Überhitzung von Lithium-Ionen-Akkus freiwerdendem Fluorwasserstoff, z. B. in Form von Flusssäure, in die Umgebung vermieden oder zumindest verringert werden. Das Gefahrenpotenzial bei der Lagerung von Batterien kann dadurch gesenkt werden.

Das Filter kann beispielsweise zur Filtration basierend auf einer Porengröße des Filtermaterials ausgebildet sein. Alternativ oder zusätzlich kann eine Abtrennung von Schadstoffen auch durch Adsorption im Filtermaterial erfolgen. Hierfür kann das Filtermaterial beispielsweise Aktivkohle aufweisen. Weiter alternativ oder zusätzlich kann das Filtermaterial zur Durchführung einer chemischen Reaktion mit den Schadstoffen ausgebildet sein, wobei das Reaktionsprodukt unschädlich ist und/oder seinerseits im Filter zurückgehalten wird.

Das Filter kann beispielsweise einen Filterrahmen umfassen, in dem das Filtermaterial gehalten wird.

Vorzugsweise kann das Filter in der Druckentlastungsöffnung angeordnet sein. Dies hat den Vorteil, dass alle die Druckentlastungsöffnung durchströmende Gase zwangsläufig auch das Filter durchströmen müssen und gefiltert werden. Dadurch kann eine weitgehende Reinigung der Gase vor deren Abgabe in die Umgebung erreicht werden.

Gemäß weiteren Ausführungsvarianten kann das Behältnis eine die Druckentlastungsöffnung abdeckend angeordnete Druckentlastungseinrichtung aufweisen.

Die Druckentlastungseinrichtung weist Öffnungen auf und/oder kann Öffnungen ausbilden, die einen Gasaustritt aus dem Lagerraum in die Umgebung zumindest bei Überdruck im Lagerraum, z. B. in Folge einer Explosion, ermöglichen.

Dadurch können einerseits ein Eindringen von unerwünschten Fremdstoffen aus der Umgebung in den Lagerraum verhindert oder zumindest erschwert werden und andererseits kann ein Entweichen von insbesondere Gasen aus dem Lagerraum in die Umgebung im Normalzustand, d. h. ohne Überdruck im Lagerraum, weitgehend vermieden oder zumindest eingeschränkt werden. Andererseits wird bei Überdruck im Lagerraum ein schneller Druckausgleich zwischen dem Lagerraum und der Umgebung ermöglicht, so dass eine druckbedingte Beschädigung oder Zerstörung des Behältnisses vermieden werden kann.

Die Druckentlastungseinrichtung kann beispielsweise kuppelförmig ausgebildet sein, z. B. als eine die Druckentlastungsöffnung abdeckende Druckentlastungskuppel.

Optional kann das vorstehend erwähnte Filter oder ein zusätzliches Filter derart in der Druckentlastungseinrichtung angeordnet sein, dass aus dem Lagerraum entweichendes Gas vor der Abgabe in die Umgebung das Filter durchströmt und gefiltert wird. Hierfür kann das Filter zwischen der Druckentlastungsöffnung und den Öffnungen der Druckentlastungseinrichtung angeordnet sein.

Gemäß weiteren Ausführungsvarianten kann die Druckentlastungseinrichtung einen Wetterschutz aufweisen.

Der Wetterschutz kann die Druckentlastungseinrichtung insbesondere nach oben hin abdecken, um ein Eindringen von Schmutz und Wasser weitgehend zu verhindern. Dadurch kann eine hohe Lebensdauer des Behältnisses und seiner Komponenten, z. B. des Filters, erreicht werden, insbesondere bei einer Aufstellung des Behältnisses im Freien.

Der Wetterschutz kann beispielsweise aus Stahlblech, bevorzugt verzinktem Stahlblech gefertigt sein. Der Wetterschutz kann kuppelförmig ausgebildet sein, um ein gutes Ablaufen von z. B. Regenwasser zu ermöglichen und die Ausbildung von Wasserlachen auf der Oberfläche des Wetterschutzes zu vermeiden. Der Wetterschutz kann geneigt angeordnet sein, um ein Ablaufen von Wasser in nur eine Richtung, z. B. in Richtung einer dem Türelement gegenüberliegend angeordneten Rückwand, zu ermöglichen und so z. B. ablaufendes Wasser einfacher sammeln zu können.

Gemäß weiteren Ausführungsvarianten kann die Druckentlastungseinrichtung fest, d. h. im Gebrauchszustand unbeweglich, mit dem Behältniskörper verbunden sein, z. B. mittels einer Schraubverbindung. Indem bewegliche Teile vermieden werden, können Verschleiß und Wartungsaufwand reduziert werden.

Gemäß weiteren Ausführungsvarianten kann der Behältniskörper ein Bodenelement, ein Deckelement und mindestens ein Seitenelement aufweisen.

Der Begriff "Bodenelement" bezeichnet dabei denjenigen Abschnitt des Behältniskörpers, der in der Nähe des Fuß- oder Erdbodens am Aufstellort, beispielsweise im Wesentlichen parallel zum Fuß- oder Erdboden am Aufstellort, angeordnet ist. Der Begriff "Deckelement" bezeichnet einen dem Bodenelement gegenüberliegend angeordneten Abschnitt des Behältniskörpers, der beispielsweise im Wesentlichen parallel zum Bodenelement angeordnet sein kann. Der Begriff "Seitenelement" bezeichnet einen das Bodenelement mit dem Deckelement verbindend angeordneten Abschnitt des Behältniskörpers, der beispielsweise im Wesentlichen senkrecht zum Bodenelement und/oder Deckelement angeordnet sein kann.

Das Bodenelement kann als Bodenplatte ausgebildet sein und optional Einfahröffnungen für Gabelzinken eines Gabelstaplers aufweisen. Dadurch können Gabelzinken eines Gabelstaplers zum Transport des Behältnisses in die Einfahröffnungen eingreifen, so dass das Behältnis auf einfache Art und Weise angehoben und ggf. transportiert, z. B. verladen, werden kann.

Bei einer quaderförmigen Ausbildung des Behältniskörpers weist dieser vier Seitenelemente auf, die zusammen einen dreiseitigen Hauptkörper bilden können, der einstückig gefertigt sein kann. Das Bodenelement und das mindestens eine Seitenelement bzw. der Hauptkörper können fest miteinander verbunden, z. B. miteinander verschraubt, sein, um eine stabile Verbindung dieser Elemente zu ermöglichen. Die Verschraubung kann beispielsweise mittels Wellenankern und Gewindestangen realisiert sein. Optional kann außenseitig eine Putzschicht auf das mindestens eine Seitenelement und zumindest einen Abschnitt des Bodenelements aufgebracht sein.

Optional können zumindest das Bodenelement und das mindestens eine Seitenelement einstückig gefertigt sein. Dadurch kann eine nachträgliche Verbindung des Bodenelements mit dem mindestens einen Seitenelement, die eine mögliche Schwachstelle bei Überdruck im Lagerraum darstellt, entfallen.

Das Deckelement und das mindestens eine Seitenelement bzw. der Hauptkörper können fest miteinander verbunden, z. B. miteinander verschraubt, sein, um eine stabile Verbindung dieser Elemente zu ermöglichen. Die Verschraubung kann beispielsweise mittels Wellenankern und Gewindestangen realisiert sein. Optional kann außenseitig eine Putzschicht auf das mindestens eine Seitenelement und zumindest einen Abschnitt des Deckelements aufgebracht sein. Mit anderen Worten können sämtliche Bauteile des Behältniskörpers miteinander verschraubt sein und optional teilweise oder vollständig von einer Putzschicht bedeckt sein.

Alternativ kann der gesamte Behältniskörper einstückig gefertigt sein. Dadurch kann eine nachträgliche Verbindung der Elemente, die eine mögliche Schwachstelle bei Überdruck im Lagerraum darstellen kann, entfallen.

Die Druckentlastungsöffnung kann bevorzugt im Deckelement angeordnet sein. Dadurch kann ein versehentliches Austreten von Flüssigkeiten und Feststoffen durch die Druckentlastungsöffnung vermieden werden. Zudem ermöglicht diese Ausgestaltung eine einfache Befestigung und/oder Nachrüstung mit einer der vorstehend beschriebenen Druckentlastungseinrichtungen sowie eine gute Zugänglichkeit der Druckentlastungsöffnung und/oder der Druckentlastungseinrichtung, beispielsweise zur Durchführung eines Wechsels des Filters der Druckentlastungseinrichtung.

Gemäß weiteren Ausführungsvarianten kann der Behältniskörper aus Beton bestehen.

Aufgrund des hohen Eigengewichts eines aus Beton hergestellten Behältniskörpers kann eine hohe Standfestigkeit und Beständigkeit auch bei starken Explosionen im Lagerraum erreicht werden. Zudem zeichnet sich Beton durch seine gute Feuerbeständigkeit aus, so dass ein Übergreifen von Flammen aus dem Lagerraum auf den Behältniskörper und dessen Umgebung nicht zu erwarten ist.

Vorzugsweise kann der Beton bewehrt sein, beispielsweise mit Stahl, wodurch eine höhere Stabilität und eine höhere Beständigkeit bei einer Explosion im Lagerraum erreicht werden können.

Bevorzugt kann der Beton wasserundurchlässig sein, um einerseits ein Eindringen von Wasser in das Behältnis und andererseits ein Austreten von Flüssigkeit aus dem Lagerraum zu verhindern. Weiter bevorzugt kann der Beton der Druckfestigkeitsklasse C35/45 gemäß DIN EN 206:2021-06 entsprechen. Hierdurch kann eine ausreichende Beständigkeit auch bei starken Explosionen im Lagerraum erreicht werden. Weiter bevorzugt kann der Beton den Vorgaben der Expositionsklassen XC4, XD1, XF1 und/oder XA1 gemäß DIN EN 1992-1-1:2011-01 genügen. Hierdurch kann eine verbesserte Widerstandsfähigkeit gegenüber chemischen und physikalischen Einwirkungen erreicht werden.

Der Behältniskörper kann insbesondere aus einem einzigen Betonfertigteil oder mehreren zusammengesetzten Betonfertigteilen gebildet sein. Dies ermöglicht eine kostengünstige Fertigung ohne größere Qualitätsschwankungen. Bevorzugt können alle sichtbaren Seiten schalungsglatt und alle sichtbaren Kanten gefast ausgeführt sein. Dies kann eine verbesserte gestalterische Anpassung an die Umgebung ermöglichen und die Verletzungsgefahr verringern.

Gemäß weiteren Ausführungsvarianten kann das Türelement ein Stahltürelement sein.

Dadurch kann eine hohe Beständigkeit, z. B. im Explosionsfall, gewährleistet werden.

Bevorzugt kann das Türelement aus verzinktem Stahlblech gebildet sein, optional mit einem Anstrich, z. B. einer Lackierung, versehen, die dem Schutz dient und die bei Ausführung in einer Signalfarbe eine schnelle Erkennung des Behältnisses im Gefahrfall ermöglicht.

Gemäß weiteren Ausführungsvarianten kann das Verriegelungssystem einen Keilhebelverschluss aufweisen.

Ein solcher Verschluss kann eine besonders stabile Arretierung des Türelements in der Beladungs- und Entnahmeöffnung ermöglichen. Hierdurch kann eine hohe Beständigkeit der Arretierung auch bei Druckerhöhung im Lagerraum, z. B. in Folge eines Explosionsereignisses, ermöglicht werden. Gleichzeitig ist ein Keilhebelverschluss einfach und mit geringem Kraftaufwand bedienbar, so dass eine fehlerhafte Arretierung des Türelements vermieden werden kann.

Gemäß weiteren Ausführungsvarianten kann im Lagerraum eine Auffangwanne angeordnet sein.

Mittels der Auffangwanne können austretende Flüssigkeiten und Feststoffe aufgefangen, gesammelt und ggf. entsorgt oder weiterverwendet werden. Beispielsweise können während eines Brandes entstehende Flüssigkeiten, z. B. geschmolzene Kunststoffe, aufgefangen werden, wodurch ein Austreten aus dem Behältnis und eine Verschmutzung der Umgebung verhindert werden kann.

Die Auffangwanne kann aus Stahlblech, z. B. Stahlblech S235 JR, gefertigt sein. Dies hat den Vorteil einer weitgehenden Inertheit, guten Schweißbarkeit, Verformbarkeit und Festigkeit. Bevorzugt kann die Auffangwanne flüssigkeitsdicht, z. B. gemäß DIN EN ISO 3452-1:2022-02, verschweißt sein, so dass ein unerwünschtes Austreten von gesammelten Flüssigkeiten vermieden werden kann.

Gemäß weiteren Ausführungsvarianten kann das Behältnis eine Ladeeinrichtung, ausgebildet zum elektrischen Laden von Batterien, aufweisen.

Eine solche Ladeeinrichtung kann eine Stromzuführung und einen Ladeanschluss zur Einspeisung elektrischer Energie in die zu ladende Batterie aufweisen. Optional kann die Ladeeinrichtung zum Laden mehrerer Batterien ausgebildet sein.

Mittels der Ladeeinrichtung wird eine sichere Ladung von im Behältnis gelagerten Batterien ermöglicht. Die negativen Folgen einer evtl. bei dem Ladevorgang auftretenden Überhitzung der Batterie können durch die Lagerung im Behältnis verringert werden.

Ein weiterer Aspekt der Erfindung betrifft die Verwendung eines Behältnisses gemäß vorstehender Beschreibung zur Lagerung von Batterien.

Daher dienen die obigen Ausführungen zur Erläuterung des vorgeschlagenen Behältnisses auch zur Beschreibung der vorgeschlagenen Verwendung. Mit der Verwendung sind die vorstehend mit Bezug auf das Behältnis genannten Vorteile entsprechend verbunden.

Die Erfindung wird nachfolgend anhand der Abbildungen näher erläutert. Es zeigen:
- Fig. 1: eine schematische Darstellung eines beispielhaften Behältnisses im geschlossenen Zustand in Frontansicht;
- Fig. 2: eine schematische Darstellung des beispielhaften Behältnisses im geschlossenen Zustand in Seitenansicht;
- Fig. 3: eine schematische Darstellung des beispielhaften Behältnisses im geschlossenen Zustand in Draufsicht;
- Fig. 4: eine schematische Darstellung des beispielhaften Behältnisses im geöffneten Zustand;
- Fig. 5: eine schematische Darstellung einer beispielhaften Druckentlastungseinrichtung in Frontansicht; und
- Fig. 6: eine schematische Darstellung der beispielhaften Druckentlastungseinrichtung in Seitenansicht.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend. In den Figuren werden identische oder ähnliche Elemente mit identischen Bezugszeichen versehen, soweit dies zweckmäßig ist.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

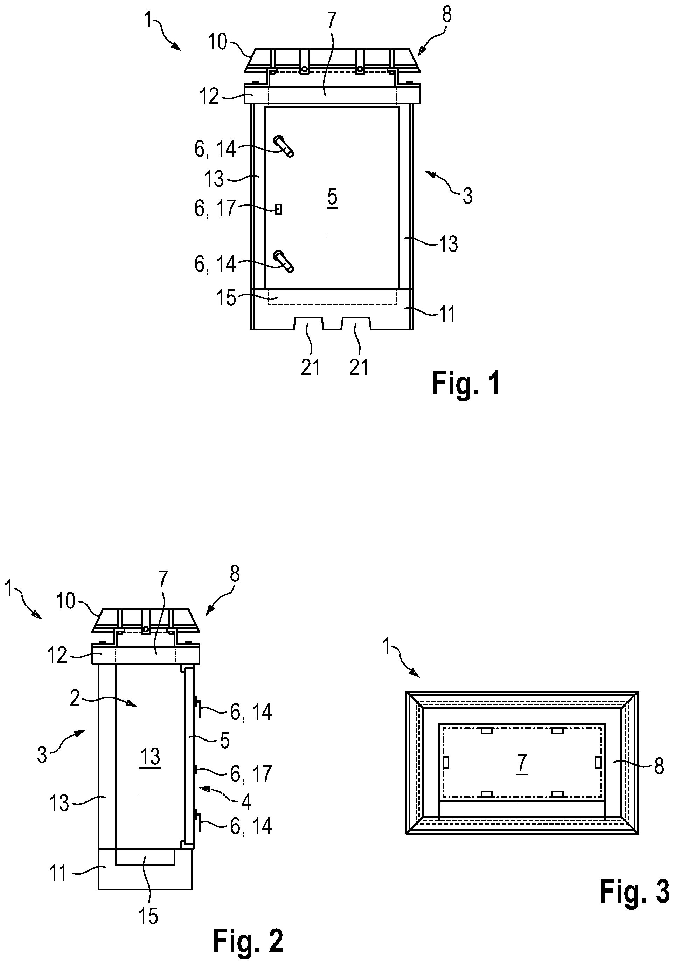

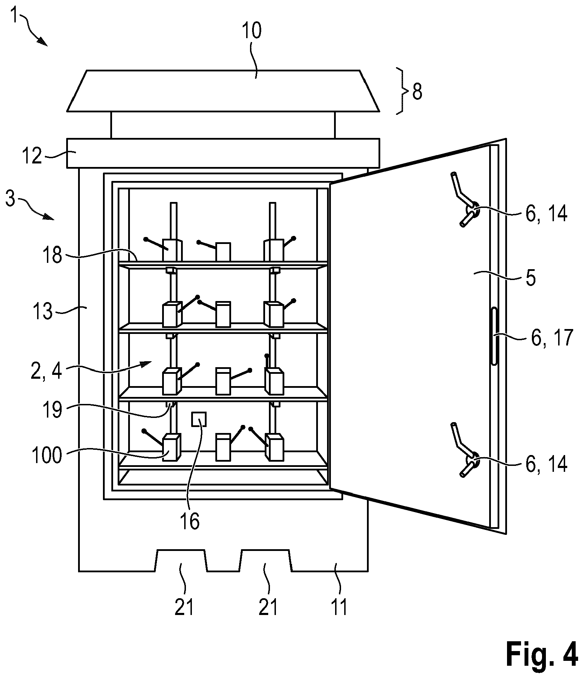

Die Figuren 1 bis 4 zeigen ein Ausführungsbeispiel eines Behältnisses 1 zur Lagerung von Batterien 100, z. B. Lithium-Ionen-Akkumulatoren. In Figur 4 sind beispielhaft zwölf gelagerte Batterien 100 dargestellt. Das Behältnis 1 weist einen im Wesentlichen quaderförmigen Behältniskörper 3 auf, der einen Lagerraum 2 umgibt bzw. umschließt. Der Behältniskörper 3 wird durch ein Bodenelement 11, ein Deckelement 12 und vier Seitenelemente 13 gebildet.

Der Behältniskörper 3 ist aus Stahlbeton gefertigt, wofür wasserundurchlässiger Beton C 35/45 genutzt wurde. Alle Sichtseiten sind schalungsglatt ausgeführt, alle sichtbaren Kanten sind gefast. Der Behältniskörper 3 genügt der Feuerbeständigkeitsklasse F90. Insgesamt besteht der Behältniskörper 3 aus drei Betonfertigteilen, nämlich einem ersten Fertigteil, welches dem Bodenelement 11 entspricht, einem zweiten Fertigteil, welches die Seitenelemente 13 umfasst und einem dritten Fertigteil, welches dem Deckelement 12 entspricht. Nach der Fertigung, z. B. in einem Betonwerk, wurden alle drei Fertigteile miteinander verschraubt und derart verputzt, dass die Schraubverbindungen äußerlich nicht mehr erkennbar sind. Optional kann das Deckelement 12 in Richtung des rückseitigen Seitenelements 13 geneigt ausgeführt und optional mit einer Tropfkante versehen sein, um einen gezielten Ablauf von z. B. Regenwasser zu ermöglichen.

In das Bodenelement 11 sind zwei parallel zueinander angeordnete Einfahröffnungen 21 eingebracht, in die Gabelzinken eines Gabelstaplers eingreifen können, um das Behältnis 1 auf einfache Art und Weise transportieren und positionieren zu können. Die Einfahröffnungen 21 weisen im Ausführungsbeispiel die Abmessungen 220 × 100 mm auf, wobei selbstverständlich auch andere Abmessungen genutzt werden können.

Das in der Darstellung der Figur 1 nach vorn weisende Seitenelement 13 weist eine Beladungs- und Entnahmeöffnung 4 auf, durch die Gegenstände, also z. B. Batterien 100, in den Lagerraum 2 eingebracht und wieder entnommen werden können.

In der Beladungs- und Entnahmeöffnung 4 ist ein Türelement 5 angeordnet, mittels dessen die Beladungs- und Entnahmeöffnung 4 wahlweise geöffnet oder verschlossen werden kann. Das Türelement 5 ist im Ausführungsbeispiel als Stahltürelement aus verzinktem Stahlblech mit einer optionalen Lackierung ausgebildet. Beispielsweise kann als Türelement 5 eine T90-1 Brandschutztür genutzt werden. Der maximale Öffnungswinkel des Türelements 5 beträgt 130 °.

Das Behältnis 1 verfügt zudem über ein Verriegelungssystem 6, welches dem Arretieren des Türelements 5 in der Beladungs- und Entnahmeöffnung 4 dient. Im Ausführungsbeispiel 6 umfasst das Verriegelungssystem 6 drei Verriegelungselemente. Ein oberes und ein unteres (bezogen auf die Darstellung in Figur 1) Verriegelungselement sind als Keilhebelverschluss 14 ausgebildet, während ein mittleres Verriegelungselement als abschließbares Verriegelungselement 14, z. B. als Einfallen-Riegelschloss, ausgebildet ist.

Im Lagerraum 2 ist ein Kragarmregal 19 angeordnet, welches im Ausführungsbeispiel vier Lagerebenen 18 ausbildet (siehe Figur 4). Die Lagerebenen 18 können beispielsweise durch Lochbleche oder Gitterroste gebildet sein, die optional höhenverstellbar sein können, z. B. in einem Raster von je 100 mm. Das Kragarmregal 19 des Ausführungsbeispiels ist komplett verzinkt und umfasst zwei Regalstützen mit je vier Kragarmen und vier Gitterrostauflagen mit den Abmessungen 800 × 500 mm. Jede Lagerebene 18 ist mit maximal 100 kg belastbar. Die Erfindung ist jedoch weder auf das Vorhandensein eines Regals noch auf ein bestimmtes Regal beschränkt.

Im unteren Bereich des Lagerraums 2 ist eine Auffangwanne 15 angeordnet, mit der etwaige Fremd- oder Schadstoffe aufgefangen werden können, um deren Freisetzung in die Umgebung zu verhindern und einen geeigneten Abtransport zu ermöglichen. Die Auffangwanne 15 ist im Ausführungsbeispiel aus 3 mm flüssigkeitsdicht verschweißtem, verzinktem Stahlblech S235 JR ausgeführt und weist ein Auffangvolumen von 30 l auf.

Optional kann der Lagerraum über eine oder mehrere Ladeeinrichtungen 16 verfügen, mit denen die Batterien 100 zum Zwecke des elektrischen Ladens verbunden werden können.

Im Deckelement 12 des Behältniskörpers 3 ist eine Druckentlastungsöffnung 7 angeordnet, die im Ausführungsbeispiel einen im Wesentlichen rechteckigen Querschnitt aufweist. Alternativ kann die Druckentlastungsöffnung 7 auch anderweitig im Behältniskörper 3 angeordnet sein. Auch mehrere Druckentlastungsöffnungen 7 können vorhanden sein.

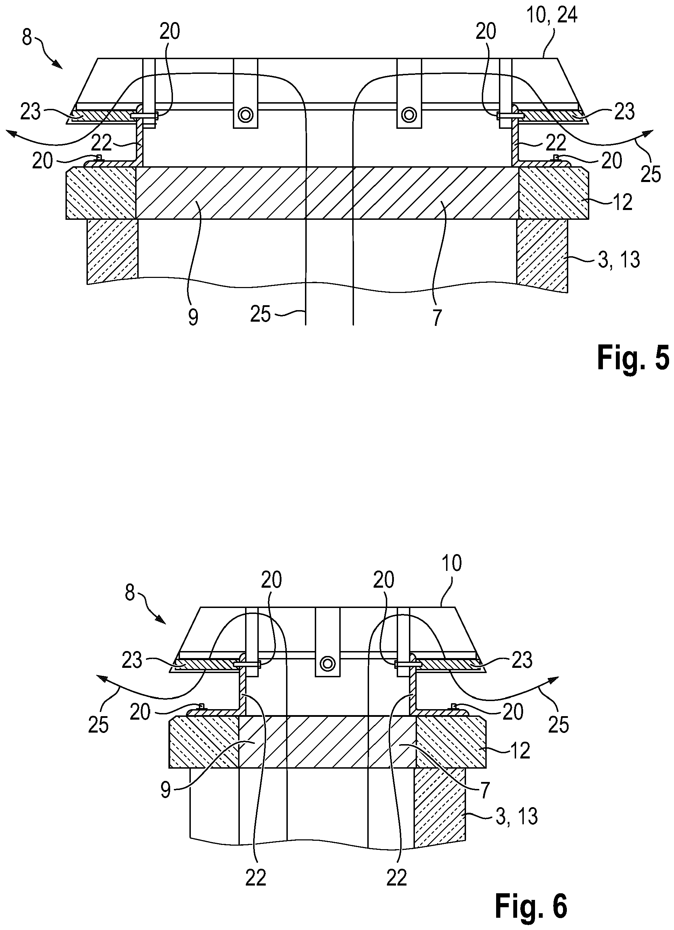

Die Druckentlastungsöffnung 7 wird von einer Druckentlastungseinrichtung 8 abgedeckt, wie in den Figuren 5 und 6 detailliert dargestellt. Die Druckentlastungseinrichtung 8 ist kuppelförmig ausgebildet und überdeckt im Wesentlichen das gesamte Deckelement 12.

Im Ausführungsbeispiel wird die Druckentlastungseinrichtung 8 durch ein die Druckentlastungsöffnung 7 umgebendes Winkelblech 22 gebildet, das mittels einer Schraubverbindung 20 fest mit dem Behältniskörper 3 verbunden ist und aus dem Lagerraum 2 ausströmende Gase nach Art eines Schornsteins aus der Druckentlastungsöffnung 7 entweichen lässt. Das Winkelblech 22 ist aus verzinktem Stahlblech gefertigt. Auf die oberen Enden des Winkelblechs 22 ist eine ebenfalls aus verzinktem Stahlblech gefertigte Haube 24 aufgesetzt, die auch als Wetterschutz 10 fungiert und daher nach oben geschlossen ausgebildet ist. Die Haube 24 ist mittels einer weiteren Schraubverbindung 20 fest mit dem Winkelblech 22 verbunden.

Ein äußerer, nach unten gerichteter Abschnitt der Haube 24 wird durch ein Lochblech 23 gebildet. Mit anderen Worten ist der Überstand der Haube 24 über das Winkelblech 22 in Richtung Behältniskörper 3 mittels des Lochblechs 23 verschlossen. Das Lochblech 23 ist ebenfalls aus verzinktem Stahlblech gefertigt.

In der Druckentlastungsöffnung 7 ist ein Filter 9 angeordnet. Das Filter 9 umfasst im Ausführungsbeispiel einen Filterrahmen aus verzinktem Stahlblech und eine Vliesmatte als Filtermaterial. Der Filterrahmen wird durch zwei verzinkte Stahlbleche gebildet, zwischen denen die Vliesmatte gehalten wird. Der Filterrahmen ist umlaufend in der Druckentlastungsöffnung 7 fixiert, wobei der Übergang zwischen Filterrahmen und Druckentlastungsöffnung 7 mittels eines Brandschutzkits rauchdicht abgedichtet ist. In die verzinkten Stahlbleche sind mehrere Öffnungen, z. B. Stanzungen, eingebracht, so dass aus dem Lagerraum 2 entweichende Gase den Filterrahmen und die Vliesmatte durchströmen können.

Das Filter 9 dient der Filterung von Schadstoffen, insbesondere der Entfernung von Partikeln und Fluorwasserstoff aus das Filter 9 durchströmenden Gas.

Ein mögliches Vliesmaterial kann als mehrschichtiger Stoff mit einer flächenbezogenen Masse von 2200 ± 100 g/m³ gemäß DIN EN 29073-1:1992-08 DE und einer Dicke von ca. 10,5 mm gemäß DIN EN 29073-2:1997-02 ausgebildet sein. Ein solches Vliesmaterial kann doppellagig in einen Filterrahmen eingelegt werden, so dass sich eine Gesamtdicke von ca. 21 mm ergibt. Weitere optionale Eigenschaften des Vliesmaterials können sein: innere Schicht als Oberflächenschutz implementiert, Außenschicht als platzbeständiges Aramidgewebe ausgeführt, passives System, Wärmebeständigkeit bis ca. + 1500 °C, für kurze Zeit bis zu ca. 2000 °C, Brandschutzklasse nach DIN 4102, Baustoffklasse A1 (nicht brennbar).

In dem Lagerraum 2 z. B. in Folge eines Explosionsereignisses entstehende oder bereits vorhandene Gase strömen, insbesondere bei Überdruck im Lagerraum 2, durch die Druckentlastungsöffnung 7 aus dem Behältniskörper 3 in die Druckentlastungseinrichtung 8. Hierbei durchqueren die Gase das Filter 9. Die gefilterten Gase werden an der oberen Abdeckung der Haube 24 umgelenkt und wieder nach unten gedrückt. Anschließend verlassen die gefilterten Gase die Druckentlastungseinrichtung 8 über die Löcher des Lochblechs 23 in die Umgebung. Die Gasströmung 25 ist in den Figuren 5 und 6 mittels eines Pfeils schematisch dargestellt.

Das Behältnis 1 des Ausführungsbeispiels weist folgende Abmessungen auf: Außenmaße (BxTxH): 1500 × 910 × 2314 mm, Innenmaße (BxTxH): 1100 × 630 × 1600 mm, Querschnitt der Druckentlastungsöffnung 7: 0,31 m², Maße des Türelements 5: 1100 × 1600 mm; Eigengewicht: 2850 kg; Wandstärke der Seitenelemente 13: 140 mm; Wandstärke des Deckelements 12: 150 mm. Diese Abmessungen sind als beispielhafte Abmessungen zu verstehen. Andere Abmessungen sind selbstverständlich möglich.

Das Behältnis 1 gemäß Ausführungsbeispiel wurde einem Brandlasttest unterzogen. Hierfür wurden im Behältnis 1 zwölf E-Bike-Akkus (Hailong 3; 46,8 V; 12,5 Ah) gelagert, wovon drei, auf der untersten Lagerebene 18 gelagerte Akkus mit einem Energieinhalt von 1755 Wh im Rahmen des Brandlasttests zum thermischen Durchgehen angeregt wurden. Eine Propagation des thermischen Durchgehens von der untersten Lagerebene 18 auf die Akkus in den darüber liegenden Lagerebenen 18 hat nicht stattgefunden.

Während des Versuchs wurde die Rauchgasfreisetzung durch Videoaufnahmen dokumentiert und die Temperaturen an den Außenseiten des Behältniskörpers 3 wurden aufgezeichnet. Ebenso wurde der Fluorwasserstoffgehalt im freigesetzten Gas bestimmt.

Die Temperaturen an den Außenseiten des Behältniskörpers 3 haben zu keinem Zeitpunkt den Wert von T = 100 °C überschritten. Als maximale Temperatur wurde Tmax = 19,1 °C ermittelt. Im austretenden Gas konnte keine relevante Menge an Fluorwasserstoff bestimmt werden. Es kam zu keinem Flammenaustritt aus dem Behältnis 1. Ebenso konnte kein Austritt von festen Teilen aus dem Behältnis 1 detektiert werden. Die bauliche Unversehrtheit des Behältnisses 1 nach dem Versuch war gegeben.

Demnach ist das Behältnis 1 sehr gut für die Lagerung von Batterien 100 geeignet. Daneben werden auch die Vorschriften der Verpackungsrichtlinie P911 gemäß ADR erfüllt, so dass auch ein Transport von Batterien 100 im Behältnis 1 möglich ist.

### Bezugszeichenliste

- 1: Behältnis
- 2: Lagerraum
- 3: Behältniskörper
- 4: Beladungs- und Entnahmeöffnung
- 5: Türelement
- 6: Verriegelungssystem
- 7: Druckentlastungsöffnung
- 8: Druckentlastungseinrichtung
- 9: Filter
- 10: Wetterschutz
- 11: Bodenelement
- 12: Deckelement
- 13: Seitenelement
- 14: Keilhebelverschluss
- 15: Auffangwanne
- 16: Ladeeinrichtung
- 17: abschließbares Verriegelungselement
- 18: Lagerebene
- 19: Kragarm regal
- 20: Schraubverbindung
- 21: Einfahröffnung
- 22: Winkelblech
- 23: Lochblech
- 24: Haube
- 25: Gasströmung

- 100: Batterie

## Patentansprüche

1. Behältnis (1) zur Lagerung von Batterien (100), das Behältnis (1) aufweisend:
- einen einen Lagerraum (2) umschließenden Behältniskörper (3) mit einer Beladungs- und Entnahmeöffnung (4),
- ein in der Beladungs- und Entnahmeöffnung (4) angeordnetes Türelement (5),
- ein Verriegelungssystem (6), ausgebildet zum Arretieren des Türelements (5) in der Beladungs- und Entnahmeöffnung (4) bei geschlossenem Türelement (5), und
- eine im Behältniskörper (3) angeordnete Druckentlastungsöffnung (7).

2. Behältnis (1) nach Anspruch 1, aufweisend:
- ein Filter (9), ausgebildet zur Filterung von aus dem Lagerraum (2) entweichenden Gasen.

3. Behältnis (1) nach Anspruch 2, wobei das Filter (9) in der Druckentlastungsöffnung (7) angeordnet ist.

4. Behältnis (1) nach Anspruch 2 oder 3, wobei das Filter (9) zur Entfernung von Fluorwasserstoff aus den aus dem Lagerraum (2) entweichenden Gasen ausgebildet ist.

5. Behältnis (1) nach einem der vorstehenden Ansprüche, aufweisend:
- eine die Druckentlastungsöffnung (7) abdeckend angeordnete Druckentlastungseinrichtung (8).

6. Behältnis (1) nach Anspruch 5, wobei die Druckentlastungseinrichtung (8) einen Wetterschutz (10) aufweist.

7. Behältnis (1) nach Anspruch 5 oder 6, wobei die Druckentlastungseinrichtung (8) fest mit dem Behältniskörper (3) verbunden ist.

8. Behältnis (1) nach einem der vorstehenden Ansprüche, wobei der Behältniskörper (3) ein Bodenelement (11), ein Deckelement (12) und mindestens ein Seitenelement (13) aufweist.

9. Behältnis (1) nach Anspruch 8, wobei die Druckentlastungsöffnung (7) im Deckelement (12) angeordnet ist.

10. Behältnis (1) nach einem der vorstehenden Ansprüche, wobei der Behältniskörper (3) aus Beton besteht.

11. Behältnis (1) nach einem der vorstehenden Ansprüche, wobei das Türelement (5) ein Stahltürelement ist.

12. Behältnis (1) nach einem der vorstehenden Ansprüche, wobei das Verriegelungssystem (6) einen Keilhebelverschluss (14) aufweist.

13. Behältnis (1) nach einem der vorstehenden Ansprüche, wobei im Lagerraum (2) eine Auffangwanne (15) angeordnet ist.

14. Behältnis (1) nach einem der vorstehenden Ansprüche, aufweisend:
- eine Ladeeinrichtung (16), ausgebildet zum elektrischen Laden von wiederaufladbaren Batterien (100).

15. Verwendung eines Behältnisses (1) nach einem der vorstehenden Ansprüche zur Lagerung von Batterien (100).
